(19) Europäisches Patentamt
European Patent Office
Office européen des brevets

(11) **EP 4 539 141 A1**

(12) **EUROPÄISCHE PATENTANMELDUNG**

(43) Veröffentlichungstag:
**16.04.2025   Patentblatt 2025/16**

(21) Anmeldenummer: **24205504.4**

(22) Anmeldetag: **09.10.2024**

(51) Internationale Patentklassifikation (IPC):
**H01M 4/133** (2010.01)      **H01M 4/62** (2006.01)
**H01M 10/0525** (2010.01)     **H01M 10/056** (2010.01)
**H01M 50/534** (2021.01)      **H01M 10/0566** (2010.01)
**H01M 10/0568** (2010.01)      H01M 4/583 (2010.01)

(52) Gemeinsame Patentklassifikation (CPC):
**H01M 10/0568; H01M 4/133; H01M 10/0525;**
**H01M 10/0566;** H01M 4/583; H01M 4/622;
H01M 4/625; H01M 50/409; H01M 50/534;
H01M 2300/0028

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(30) Priorität: **13.10.2023   DE 102023128070**

(71) Anmelder: **Technische Universität Dresden**
**Körperschaft des**
**öffentlichen Rechts**
**01069 Dresden (DE)**

(72) Erfinder:
• **FENG, Xinliang**
**01069 Dresden (DE)**
• **SABAGHI, Davood**
**01069 Dresden (DE)**
• **SHAYGAN NIA, Ali**
**01069 Dresden (DE)**

(74) Vertreter: **Kailuweit & Uhlemann Patentanwälte**
**Partnerschaft mbB**
**Bamberger Straße 49**
**01187 Dresden (DE)**

(54) **ELEKTROCHEMISCHES BAUELEMENT UND DESSEN VERWENDUNG**

(57)    Die Erfindung betrifft ein elektrochemisches Bauelement umfassend eine Anode, eine Kathode, einen Elektrolyten, jeweils einen Stromkollektor und einen Separator, wobei sowohl die Anode als auch die Kathode aus mindestens einem kohlenstoffbasierten Material ist. Der wasserfrei oder nahezu wasserfreie Elektrolyt ist hochkonzentriert und weist mindestens zwei verschiedene Alkalisalze mit unterschiedlichen Anionen auf.

Fig. 1

**Beschreibung**

Die Erfindung betrifft ein elektrochemisches Bauelement umfassend eine Anode, eine Kathode, einen Elektrolyten, jeweils einen Stromkollektor und einen Separator, wobei sowohl die Anode als auch die Kathode aus mindestens einem kohlenstoffbasierten Material ist.

Die Weiterentwicklung erneuerbarer Energien erfordert kostengünstige Energiespeichersysteme im Terawattstundenbereich. Gleichzeitig stellt die Stabilisierung des elektrischen Netzes zukünftig einen essenziellen Aspekt zur Dekarbonisierung der Energiewirtschaft und des Verkehrs dar. In diesem Zusammenhang werden kohlenstoffbasierte Dual-Ionen-Batterien (GDIBs) (eng. *Graphite or Carbon based Dual Ion Batteries*) als vielversprechendes Batteriekonzept für skalierbare Energiespeicherung betrachtet, da sie kosteneffizient, nachhaltig und in der Lage sind, in einem breiten Spannungsbereich zu operieren.

Anders als Lithium-Ionen-Batterien, die die Bewegung von Lithium-Ionen ($Li^+$) zwischen der Kathode und der Anode während des Lade- und Entladevorgangs ermöglichen, erlauben kohlenstoffbasierte Dual-Ionen-Batterien die gleichzeitige Bewegung von Kationen, wie Lithium-Ionen ($Li^+$), und Anionen, wie Hexafluorophosphat-Ionen ($PF_6^-$) während der Lade- und Entladevorgänge (sowohl Kationen als auch Anionen nehmen an der elektrochemischen Redoxreaktion teil).

Kohlenstoffbasierte Dual-Ionen-Batterien (GDIBs) bieten im Vergleich zu herkömmlichen "Rocking-Chair"-Batterien zahlreiche Vorteile. Hierzu zählen insbesondere eine hohe Betriebsspannung von über 4,5 V, eine schnelle Ladekinetik, gesteigerte Sicherheit sowie die Verwendung nachhaltiger und umweltfreundlicher Materialien.

Unter dem Begriff "Rocking-Chair-Batterien" versteht man eine spezielle Art von Batterien, die auch als Lithium-Ionen-Batterien (Li-Ionen-Batterien) bekannt sind. Ihr Betrieb basiert auf dem periodischen Austausch von Lithium-Ionen (Li-Ionen) zwischen zwei Elektroden während des Lade- und Entladezyklus, weshalb eine Analogie zum Bewegungsmuster des Hin- und Herschaukelns eines Stuhls gezogen wurde und somit der Name *"Rocking-Chair"* entstand.

1989 entwickelten McCullough et al. (U.S. Patent. 4, 830-938) erstmals eine Batterie mit zwei kohlenstoffbasierten Elektroden für mögliche Sekundärbatterien. In diesem experimentellen Szenario bestand die Versuchsanordnung aus zwei Graphitelektroden, die als Anode und Kathode fungierten. Der Elektrolyt, der zur Anwendung kam, bestand aus einer Lösung von 15 Gewichtsprozent $LiClO_4$ in Propylencarbonat. Die erzielten positiven Ergebnisse motivierten zu weiteren Untersuchungen im Hinblick auf geeignete Elektrolyte für Dual-Ionen-Batterien (DIBs). In diesem Zusammenhang wurden verschiedene Elektrolyte in Betracht gezogen, die unterschiedliche Anionen wie $BF_4^-$, $PF_6^-$, $AlCl_4^-$, $TFSI^-$ oder $FSI^-$ sowie Kationen wie $Li^+$, $Na^+$, $Et_4N^+$, $EMI^+$ (1-

Ethyl-3-methylimidazolium), $Pp14^+$ (1-Butyl-1-methylpiperidinium) oder $DMPI^+$ (N,N-Dimethylpiperidinium) enthalten.

Herkömmlich werden in Batterien verdünnte Elektrolytlösungen verwendet. Es ist zu beachten, dass die Zugabe von Wasser einen nachteiligen Einfluss auf die Gesamteigenschaften der Batterie ausübt. Dies trifft insbesondere dann zu, wenn es darum geht, hohe Ladespannungen von mehr als 4,5 V zu realisieren, was wiederum die Energiedichte der Batterie negativ beeinflusst. Der Einsatz wässriger Elektrolyte, kann u. a. zur Bildung von Wasserstoff führen und damit ein Sicherheitsrisiko beim Einsatz darstellen.

Die Energiedichte von kohlenstoffbasierten Dual-Ionen-Batterien (GDIBs) wird hauptsächlich durch die Konzentration des Elektrolyten beeinflusst. In diesem Kontext fungiert der Elektrolyt als aktives Material.

In einer Batterie bezieht sich das "aktive Material" auf die Komponenten innerhalb der Batterie, die während des Lade- und Entladevorgangs chemische Reaktionen durchführen und so die elektrische Energie erzeugen oder speichern.

Um unerwünschte Nebenreaktionen in den Kathoden von kohlenstoffbasierten Dual-Ionen-Batterien (GDIBs), insbesondere bei hohen Betriebsspannungen, zu minimieren, ist die Verwendung von Elektrolyten von hoher Reinheit und Oxidationsbeständigkeit wichtig. Einige Lösungsmittel weisen besonders hohe Oxidationsspannungen von über 5,0 V auf, wie beispielsweise 5,3 V im Vergleich zu $Li^+/Li$ für DMC (Dimethylcarbonat) mit einer Reinheit von 99,985 % und 5,5 V im Vergleich zu $Li^+/Li$ für EC (Ethylencarbonat) mit einer Reinheit von 99,979 %.

Da die Verwendung von konzentrierteren Elektrolyten in Kombination mit "Rocking-Chair"-Batterien (z. B. mit Lithium-Ionen-Batterien (LIBs)) in den meisten Fällen zu einer Verringerung der Energiedichte führt und aufgrund langjähriger industrieller Erfahrungen wurde eine Konzentration von 1 M als optimal erachtet.

Generell sind die Energiedichten bei GDIBs bisher deutlich geringer als bei konventionellen LIBs. Daher sind die GDIBs bisher nicht mit den LIBs konkurrenzfähig. Die maximale Elektrolytkonzentration (*organic solvent based electrolyte*), die bei GDIBs bisher erreicht wurde, liegt bei etwa 3 bis 4 M. Dies ist auf Probleme, wie hohe Viskosität, mangelnde Benetzbarkeit und eine langsamere $Li^+$-Interkalationskinetik im Vergleich zu Anionen zurückzuführen, was zu einer verringerten Anodenkapazität ($<100\ mAh\ g^{-1}$) führt. Elektrolyte mit hoher Konzentration weisen zudem eine geringe Transportkinetik für Lithium-Ionen ($Li^+$) auf, was ihre Fähigkeit zur Interkalation und zur Bildung von Festelektrolyt-Grenzflächen (SEI) beeinträchtigt.

CN 110635112 A beschreibt eine Doppelionen-Batterie, die auf Molybdänselenid-Graphit basiert, sowie ein Herstellungsverfahren für diese Batterie. Ein Gel, das Phosphomolybdänsäure enthält, wird mithilfe eines einfachen Sol-Gel-Verfahrens hergestellt. Das Herstellungsverfahren beinhaltet Schritte zur Kalzinierung, um das Molybdänselenid/nitrogen-dotierte Kohlenstoff (MoSe$_2$/NC)-Compound zu synthetisieren, und zur Entwicklung der Doppelionen-Batterie unter Verwendung des MoSe$_2$/NC-Compounds als negatives Elektrodenmaterial und Graphit als positives Elektrodenmaterial. Diese Methode zeichnet sich durch ihre kostengünstige Herstellung aus. Die Doppelionen-Batterie weist einen breiten Arbeitsspannungsbereich von 2 bis 5 V auf und bietet eine gute Zyklenstabilität sowie eine relativ hohe reversible Kapazität. Nach 100 Lade- und Entladezyklen unter einer 2C-Laderate beträgt die Kapazität 86 mA h/g.

DE 10 2021 115 802 A1 beschreibt ein elektrochemisches Bauelement, insbesondere eine Aluminiumionen-Batterie, die eine verbesserte Leistung und Haltbarkeit aufweist. Das Bauelement umfasst eine aromatische Aminverbindung als aktives Kathodenmaterial, welche Stickstoffatome aufweist, die mit aromatischen Gruppen verbunden sind. Während des Betriebs der Batterie bildet die Aminverbindung radikale Aminkationen, die starke ionische Bindungen mit Anionen eingehen und somit die Selbstentladung der Batterie verlangsamen. Dies führt zu einer höheren Kapazität, geringerem Kapazitätsabfall und längerer Lebensdauer.

Die Batterie besteht weiterhin aus einer Aluminiumanode oder einem Stromkollektor, einem Separator und einem Elektrolyten mit Aluminiumionen und/oder Aluminiumionenkomplexen. Die Batterie bietet eine hohe Kapazität, moderate Arbeitsspannung und lange Zyklenlebensdauer. Sie kann in einem breiten Temperaturbereich betrieben werden.

Die Anwendungsbereiche umfassen die Stromversorgung von elektronischen Geräten, Hybrid- oder Elektrofahrzeugen sowie die Speicherung von elektrischer Energie im Stromnetz.

In CN 108063217 B ist es Ziel, eine Kaliumbasierte Dual-Ionen-Batterie bereitzustellen, die die jeweiligen Vorteile von Kalium-Ionen-Batterien und Dual-Ionen-Batterien kombiniert und kostengünstige und ressourcenreiche Kalium-Ionen als Energiespeichermedium für die Einlagerung und Entnahme von Anionen verwendet. Dabei wird ein eingebettetes, graphitartiges Kohlenstoffmaterial als aktives Material für die positive Elektrode und ein poröses Kohlenstoffmaterial für die Adsorption und Desorption von Kalium-Ionen als aktives Material für die negative Elektrode verwendet. Durch die Adsorption und Desorption von Kalium-Ionen an der negativen Elektrode sowie die Einlagerung von Anionen und deren De-Interkalation an der positiven Elektrode wird der reversible Lade- und Entladevorgang der Kalium-basierten Dual-Ionen-Batterie realisiert.

Die Ladungs- und Entladereaktion an der negativen Elektrode erfolgt durch physische Adsorption und Desorption schnell und stabil, was die elektrochemische Leistungsfähigkeit verbessert und somit die Kapazität und die Zyklusstabilität der Kalium-basierten Dual-Ionen-Batterie erhöht.

Die JP 2008543002 A beschreibt eine Lithium-Ionen-Batterie mit hoher Kapazität und Spannung. Diese Batterie beinhaltet eine kohlenstoffhaltige Kathode, eine Anode bestehend aus Lithium oder Lithiumlegierungen und eine nicht-wässrige Elektrolytlösung, welche einen Anionenrezeptor enthält, der in der Lage ist, LiF-Salze und Fluoridionen zu binden. Diese Batterie kann als eine Lithium-Ionen-Batterie mit dualer Interkalationselektrode fungieren. Die Methode sieht vor, die Kathode und die Elektrodenpaare so zu gestalten, dass jede Elektrode die Ionen, die von LiF-Salz bereitgestellt werden, reversibel interkaliert, was zu einer Lithium-Ionen-Batterie mit hoher Spannung und hoher Kapazität und dualer Interkalationselektrode führt.

Die DE 10 2011 054 119 A1 beschreibt eine kohlenstoffbasierte Dual-Ionen-elektrochemische Zelle, die eine Elektrode für die reversible Aufnahme und Abgabe von Kationen, eine Elektrode für die reversible Aufnahme und Abgabe von Anionen sowie einen Elektrolyten mit einem Leitsalz und einem Lösungsmittel umfasst, wobei das Lösungsmittel eine ionische Flüssigkeit oder eine Mischung aus einer ionischen Flüssigkeit und einem organischen Lösungsmittel ist.

Die elektrochemische Zelle nutzt eine ionische Flüssigkeit oder eine Mischung aus dieser und ein organisches Lösungsmittel. Diese Flüssigkeit kann verschiedene Kationen und Anionen enthalten. Die Elektroden bestehen aus einer Vielzahl von Materialien, darunter Kohlenstoff, Metalle und Metalloxide. Diese Zelle bietet vielseitige Anwendungsmöglichkeiten in Batterien und Energiespeichersystemen.

JP 2023116297 A beschreibt eine Dual-Ionen-Batterie, bei der sowohl Anionen als auch Kationen in den Elektroden reversibel eingelagert und freigesetzt werden. Ein wesentliches Merkmal dieser Batterie ist die Verwendung von Lithiumbis(fluorosulfonyl)imid (LiFSI) als Elektrolyt, dessen Konzentration im Bereich von 1 mol/L bis 5 mol/L liegt.

Yang, D.; Watanabe, M.; et al. 2022 beschreiben eine Hochspannungs- und Hochkapazitäts-Dual-Ionen-Batterie, die einen Acetonitril-wässrigen Hybrid-Elektrolyten verwendet.

DE 10 2020 108397 B3 beschreibt eine elektrochemische Zelle mit Schwefel als Aktivmaterial in der Elektrode mit niedrigerem Redoxpotential und Kohlenstoff, insbesondere Graphit, in der Elektrode mit höherem Redoxpotential. Der Ladungstransfer erfolgt durch einen Dual-Ionen-Mechanismus, bei dem sowohl Kationen in die Schwefel-Elektrode als auch Anionen in die Kohlenstoff-Elektrode ein- und ausgelagert werden. Dieser Aufbau ermöglicht moderate Zellspannungen über 2 V, hohe Zyklstabilität und eine kostengünstige Herstellung ohne Schwermetalle.

DE 10 2011 054122 A1 beschreibt eine elektrochemische Zelle, die das Dual-Ionen-Insertions-Prinzip verwendet. Die Zelle umfasst eine Anode aus Lithiumtitanat, die Lithium-Ionen reversibel aufnimmt und abgibt, sowie eine Kathode, die Anionen reversibel aufnimmt und abgibt. Der Elektrolyt besteht aus Lithiumsalzen mit niedrigen Elektrolytkonzentrationen (unter 5M).

Die Aufgabe der vorliegenden Erfindung besteht darin, verbesserte elektrochemische Bauelemente, insbesondere mit erhöhter Energiedichte, hoher Zyklenstabilität und/oder hoher Kapazitätserhaltungsrate, bereitzustellen.

Erfindungsgemäß wird die Aufgabe durch ein elektrochemisches Bauelement, insbesondere in Form einer kohlenstoffbasierten Dual-Ionen-Batterien, gemäß den unabhängigen Ansprüchen gelöst. Vorteilhafte Ausgestaltungen der Erfindung sind in den abhängigen Ansprüchen angegeben. Darüber hinaus werden auch Verwendungsmöglichkeiten des erfindungsgemäßen Bauelements aufgezeigt.

Das erfindungsgemäße elektrochemische Bauelement umfasst mindestens eine Anode, mindestens eine Kathode, einen Separator und mindestens einen Elektrolyten, wobei die Kathode und die Anode jeweils ein kohlenstoffbasiertes Material aufweisen, wobei der Elektrolyt mindestens zwei Alkalisalze mit unterschiedlichen Anionen enthält.

Erfindungsgemäß kommt ein Elektrolyt mit einer mehrkomponentigen Zusammensetzung aus mindestens zwei Alkalisalzen in Kombination mit Elektroden aus einem kohlenstoffbasierten Material zur Anwendung. Die Alkalisalze unterscheiden sich dabei zumindest in den Anionen.

Vorteilhaft ermöglicht die Erfindung hohe Energiedichten wodurch die GDIBs konkurrenzfähig zu konventionellen Lithiumionenbatterien (LIBs) werden.

Unter dem Begriff "kohlenstoffbasierte Dual-Ionen-Batterie" (nachfolgend auch kurz GDIBs - engl. *Graphite or Carbon based Dual Ion Battery*) wird eine Batterie verstanden, wobei aktive Spezies (Kationen und Anionen) an der elektrochemischen Reaktion beteiligt sind und aktive Spezies in Wirtsverbindungen eingelagert werden. Zweckmäßig werden Anionen in eine Anionenwirtsverbindung eingelagert. Im Gegensatz zu DIBs (engl. *Dual Ion Battery*) besitzen GDIBs kohlenstoffbasierte Anoden und Kathoden und somit im Vergleich unterschiedliche elektrochemische Eigenschaften.

Die mindestens eine Kathode und die mindestens eine Anode sind aus einem kohlenstoffbasierten Material.

Unter dem Begriff "kohlenstoffbasiertes Material" werden Materialien mit einem Gehalt an Kohlenstoff von mindestens 80 Gew.-%, bevorzugt mindestens 90 Gew.-%, besonders bevorzugt mindestens 99 Gew.-%, bezogen auf das Gesamtgewicht verstanden.

In Ausführungsformen umfassen kohlenstoffbasierte Materialien Ruß, Graphitpartikel Naturgraphitflocken, Graphen, Kohlenstoffnanoröhrchen oder Karbonfasern.

Unter dem Begriff "Karbonfasern" werden graphitartig angeordnete Kohlenstoff-Fasern, welche aus kohlenstoffbasierten Ausgangsmaterialien hergestellt werden, verstanden.

Unter dem Begriff "Graphen" wird eine Modifikation des Kohlenstoffs, insbesondere ein polyzyklischer aromatischer Kohlenwasserstoff, verstanden, wobei zweidimensionale Schichten von vierwertigen Kohlenstoffatomen vorliegen und jedes Kohlenstoffatom im Winkel von 120° von drei weiteren Kohlenstoffatomen umgeben ist.

Unter dem Begriff "Ruß" wird ein schwarzer, pulverförmiger Feststoff, enthaltend Kohlenstoff mit einem Anteil im Bereich von 80 % bis 100 %, verstanden.

In Ausführungsformen umfassen kohlenstoffbasierte Materialien synthetische Graphite und expandierte Graphite

Alle Elektroden weisen einen gleichen oder unterschiedlichen Kohlenstoffmaterialaufbau auf. In Ausführungsformen weist eine Elektrode (Kathode und/oder Anode) mehrere kohlenstoffbasierte Materialien auf (z. B. in Schichten oder auch als Mischung).

In bevorzugten Ausführungsformen ist die Anode aus Graphit, insbesondere natürlichem Graphit oder synthetischem Graphit. In bevorzugten Ausführungsformen ist die Kathode aus expandiertem Graphit, synthetischem Graphit oder natürlichem Graphit.

Bei der Herstellung des erfindungsgemäßen elektrochemischen Bauelements, sind aufgrund der Verwendung von leicht verfügbaren Komponenten, insbesondere bei der Auswahl kohlenstoffbasierte Anoden und kohlenstoffbasierte Kathoden, eine deutliche Verringerung von Produktionskosten zu erwarten und damit eine Erhöhung der Wirtschaftlichkeit.

In Ausführungsformen weist mindestens eine Elektrode (Kathode und/oder Anode) weiterhin ein elektronenleitendes Additiv und/oder ein Bindemittel auf.

In Ausführungsformen ist das elektrodenleitende Additiv mindestens ein Metalloxid, bevorzugt ein Metalloxid, ausgewählt aus der Gruppe umfassend $SiO_2$, $Al_2O_3$, $Y_2O_3$, $HfO_2$, $ZrO_2$, $La_2O_3$, $Ta_2O_5$, $TiO_2$, $ZnO$, $MgO$, $NiO$, $SnO_2$, $CeO_2$, $Ce_2O_3$, and $V_2O_3$; und/oder ein elektronenleitendes kohlenstoffbasiertes Material, insbesondere Karbonnanoröhrchen (CNTs), Graphen oder Ruß.

In Ausführungsformen ist das Bindemittel aus der Gruppe umfassend Alginat, insbesondere Natriumalginat, Polyvinylidenfluorid (PVDF), Polytetrafluorethylen (PTFE), Styrol-Butadien-Kautschuk (SBR) und Carboxymethylcellulose ausgewählt.

In Ausführungsformen liegt die Carboxymethylcellulose als "Natrium-Carboxymethylcellulose" vor, darunter werden Natriumsalze von Carboxymethylcellulosen (CMC) verstanden, welche Celluloseether sind, bei denen ein Teil der Hydroxygruppen der Cellulose als Ether mit einer Carboxymethyl-Gruppe (-CH$_2$-COOH) verknüpft sind.

In Ausführungsformen liegt die Kathode und/oder die Anode als Elektrodenaufschlämmung vor.

Eine "Elektrodenaufschlämmung" ist eine Mischung aus Elektrodenmaterialien, meist in Pulverform, und einer Flüssigkeit oder Paste. Sie wird, verwendet, um eine gleichmäßige Verteilung der aktiven Materialien zu gewährleisten und den Kontakt mit dem Elektrolyten zu erleichtern. Im Sinne der Anmeldung wird darunter eine Elektrodensuspension umfassend mindestens ein aktives Elektrodenmaterial, insbesondere ein kohlenstoffbasiertes Material, dispergiert in einem Lösungsmittel verstanden. In Ausführungsformen umfasst die Elektrodenaufschlämmung weiterhin mindestens ein elektronenleitfähiges Additiv und/oder ein Bindemittel.

In Ausführungsformen wird die Elektrodenaufschlämmung wasserbasiert oder wasserfrei hergestellt. In bevorzugten Ausführungsformen ist die Elektrodenaufschlämmung wasserbasiert hergestellt. Das Wasser wird jedoch vor Einsatz als Elektrode durch Trocknung entfernt.

In Ausführungsformen umfasst das elektrochemische Bauelement einen Stromkollektor für die Kathode und/oder einen Stromkollektor für die Anode.

Unter dem Begriff "Stromkollektor" wird ein Element zur Übertragung von elektrischer Energie von einem stromführenden Leiter (Kathode und/oder Anode) zu einer elektrischen Vorrichtung verstanden.

In Ausführungsformen ist der Stromkollektor mindestens ein elektronenleitendes Material, ausgewählt aus Karbongewebe, Karbonpapier, Karbonfasern, Graphenfilmen, Glaskohlenstoff, Nickel, Tantal und/oder Wolfram.

Unter dem Begriff "Glaskohlenstoff" wird ein synthetischer Werkstoff aus reinem Kohlenstoff mit einer Fulleren-artigen Mikrostruktur verstanden, welcher glasartige keramische Eigenschaften (chemische Stabilität) sowie Eigenschaften von Graphit (elektrische Leitfähigkeit) aufweist.

Unter dem Begriff "Graphit" wird eine Modifikation des Kohlenstoffs, insbesondere hexagonale Kohlenstoffkristalle, verstanden. Graphit liegt natürlich in Form von Flocken ("Naturgraphitflocken") oder Partikeln ("Graphitpartikel") vor. In Ausführungsformen weisen die Naturgraphitflocken eine Größe im Bereich von 20 $\mu$m bis 300 $\mu$m auf.

In weiteren Ausführungsformen umfasst der Stromkollektor der Anode und/oder der Stromkollektor der Kathode mindestens ein elektronenleitendes Material ausgewählt aus Kupfer, Aluminium und Titanium.

In Ausführungsformen steht jeweils ein Stromkollektor mit der Kathode und/oder mit der Anode in Kontakt.

In Ausführungsformen ist der Separator eine Polymermembran, insbesondere eine mikroporöse Polymermembran, ein Glasfaser- oder ein Polymer-Vlies. In Ausführungsformen ist der Separator aus Polyvinylchlorid (PVC), Polyethylen, Polyamid, Polypropylen oder Glasfaser.

Unter dem Begriff "Separator" wird ein Bauteil in elektrochemischen Bauelementen verstanden, welches Kathode und Anode, d. h. die negative und positive Elektrode räumlich und elektrisch trennt und für Elektrolytionen durchlässig ist.

In Ausführungsformen ist der Separator ein Vlies aus Glasfaser.

Erfindungsgemäß umfasst das elektrochemische Bauelement mindestens einen mehrkomponentigen Elektrolyten umfassend mindestens zwei Alkalisalze mit unterschiedlichen Anionen, wobei der Elektrolyt zwischen der Anode und/oder dem Stromkollektor und der Kathode angeordnet ist.

In Ausführungsformen handelt es sich beim mehrkomponentigen Elektrolyten um einen organischen Elektrolyten.

Die Gesamtalkalisalzkonzentration beträgt zwischen 6 M und 10 M (M = mol/L). Der Begriff Gesamtalkalisalzkonzentration bezieht sich auf die Summe der mindestens zwei Alkalisalze in der Elektrolytlösung.

In Ausführungsformen sind die Alkalisalze im Elektrolyten hochkonzentriert.

"Hochkonzentriert" bedeutet im Sinne der Anmeldung, dass der Elektrolyt eine Gesamtalkalisalzkonzentration von mindestens 6 M aufweist.

Die maximale Gesamtalkalisalzkonzentration des Elektrolyten beträgt in Ausführungsformen 9 M.

In Ausführungsformen liegt das Molverhältnis der beiden Alkalisalze im Elektrolyten in einem Bereich von 1:100 bis 100:1, bevorzugt im Bereich von 1:50 bis 50:1, besonders bevorzugt im Bereich von 1:10 bis 10:1, ganz besonders bevorzugt im Bereich von 1:2,5 bis 2,5:1.

Der Elektrolyt ist wasserfrei bzw. nahezu wasserfrei. Unter dem Begriff "wasserfrei bzw. nahezu wasserfrei" wird ein Elektrolyt mit einem Wassergehalt von maximal 1 Vol.-% verstanden. Der maximale Wassergehalt des Elektrolyten beträgt in Ausführungsformen unter 0,1 Vol.-%, in bevorzugten Ausführungsformen unter 0,01 Vol.-%.

In Ausführungsformen sind die Anionen der zwei verschiedenen Alkalisalze ausgewählt aus Halogeniden, Cyanide, Boraten, Nitraten, Sulfaten, Solfonaten, Phosphaten, Amiden und Imiden. Sulfate sind insbesondere ausgewählt aus Alkylsulfaten, Arylsulfaten, Perfluoralkylsulfaten. Sulfonate sind insbesondere ausgewählt aus Alkyl- und Arylsulfonaten, perfluorierten Alkylsulfonaten, Phosphate sind insbesondere ausgewählt aus Hexafluorophosphaten und Perfluoralyklphosphaten, wie z. B. Tri(pentafluorethan)trifluorphosphat. Amide und Imide sind insbesondere ausgewählt aus Bis(perfluoralkylsulfonyl)amiden, Bis(fluorsulfonyl)imiden, Bis(perfluoralkylsulfonyl)imiden, wie Bis(trifluormethylylsulfonyl)imid und/oder Fluoralkylsulfonylacetamide, insbesondere ausgewählt aus der Gruppe umfassend Bis(trifluormethansulfonyl)imid, Bis(pentafluorethansulfonyl)imid, Bis(fluorsulfonyl)imid, 2,2,2-Trifluor-N-(trifluormethansulfonyl)acetamid. Borate sind insbesondere ausgewählt aus Tetrafluorboraten, Perfluoralkylboraten, insbesondere ausgewählt aus der Gruppe umfassend Tetrafluorborat, Pentafluorethanetrifluoroborat, Hexafluorphosphat, Bisoxolatoborat und Difluoro(oxalato)borat.

In Ausführungsformen, sind die Anionen ausgewählt aus Flourosulfonylimid (FSI⁻), Hexaflouropho-

spat ($PF_6^-$), Bis(trifluormethansulfonyl)imid (TFSI$^-$), Bis(pentafluorethansulfonyl)imid (BETI$^-$), 2,2,2-Trifluor-N-(trifluormethansulfonyl)acetamid (TSAC$^-$), Tetrafluorborat ($BF_4^-$), Pentafluorethanetrifluoroborat ($C_2F_5BF_3^-$), Bisoxolatoborat (BOB$^-$), Difluoro(oxalato)borat (DFOB$^-$) und/oder Tri(pentafluor-ethan)trifluorphosphat (($C_2F_5$)$_3PF_3^-$).

In weiteren Ausführungsformen sind die Anionen der Alkalisalze ausgewählt aus Carbonat ($CO_3^{2-}$), Chlorid (Cl$^-$), Hydroxid (OH-), Phosphat ($PO_4^{3-}$), Sulfat ($SO_4^{2-}$), Tetrachloraluminat ($AlCl_4^-$), Perchlorat ($ClO_4^-$) und Nitrat ($NO_3^-$).

Die Kationen der Alkalisalze sind ausgewählt aus Lithium, Kalium und Natrium, insbesondere Lithium.

In Ausführungsformen sind die Alkalisalze Lithiumsalze. Lithiumsalze sind chemische Verbindungen, die Lithiumionen (Li$^+$) enthalten. Diese Salze werden durch die Kombination von Lithium mit verschiedenen Anionen gebildet, wodurch eine Vielzahl von Lithiumsalzen entsteht.

In Ausführungsformen sind die zwei unterschiedlichen Lithiumsalze ausgewählt aus Lithiumcarbonat ($Li_2CO_3$), Lithiumchlorid (LiCl), Lithiumhydroxid (LiOH), Lithiumphosphat ($Li_3PO_4$), Lithiumsulfat ($Li_2SO_4$), Lithiumflourosulfonylimid (LiFSI), Lithiumbis(trifluormethansulfonyl)imid (LiTFSI), Lithiumperchlorat ($LiClO_4$) oder Lithiumtetrafluorborat ($LiBF_4$).

In Ausführungsformen sind die Alkalisalze Lithiumbis(fluorosulfonyl)imid (LiFSI) und Lithiumhexafluorophosphat ($LiPF_6$).

In Ausführungsformen enthält der Elektrolyt Lithiumbis(fluorosulfonyl)imid (LiFSI) mit einer Konzentration im Bereich von 3 M bis 6 M und Lithiumhexafluorophosphat ($LiPF_6$) mit einer Konzentration im Bereich von 1 M bis 3 M in Dimethylcarbonat und/oder Ethylencarbonat (DMC/EC). M steht für Mol pro Liter (mol/L).

In weiteren Ausführungsformen weist der Elektrolyt eine konzentrierte (7 M) Hybridelektrolytformulierung für Li-basierte DGIB auf, die auf LiFSI basiert und $LiPF_6$ als Zusatzstoff verwendet.

In Ausführungsformen liegt das Molverhältnis der beiden Alkalisalze im Elektrolyten LiFSI zu $LiPF_6$ in einem Bereich von 1:100 bis 100:1, bevorzugt im Bereich von 1:50 bis 50:1, besonders bevorzugt im Bereich von 1:10 bis 10:1, ganz besonders bevorzugt im Bereich von 1:2,5 bis 2,5:1.

Die Kontrolle des Salzgehaltes, insbesondere des maximalen Salzgehaltes, des Elektrolyten ermöglicht vorteilhafterweise die Bereitstellung eines elektrochemischen Bauelements mit einer hohen Energiedichte, Zyklenstabilität und hohen coulombschen Effizienz (*columbic efficiency*). In Ausführungsformen weist der Elektrolyt als Lösungsmittel einen Ester der Kohlensäure (Carbonat) auf, bevorzugt Dimethylcarbonat (DMC), Ethylencarbonat (EC), Diethylcarbonat (DEC), Ethylmethylcarbonat (EMC), Propylencarbonat (PC) oder Mischungen davon.

In weiteren Ausführungsformen weist der Elektrolyt als Lösungsmittel ein Sulfoxid, einen cyclischen Ether, ein Nitril oder eine ionische Flüssigkeit auf - ggf. in Mischung mit einem Carbonat. Diese Lösungsmittel sind insbesondere ausgewählt aus Dimethylsulfoxid (DMSO), 1,3-Dioxolan (DOL), Acetonitril (AN), Tetrahydrofuran (THF). Die Anionen der ionischen Flüssigkeit sind insbesondere aus den bei den Alkalisalzen genannten Anionen ausgewählt. Die Kationen der ionischen Flüssigkeit sind insbesondere ausgewählt aus der Gruppe umfassend Alkylammonium-, Pyridinium-, Pyrazolium-, Pyrrolium-, Pyrrolinium-, Phosphonium-, Piperidinium-, Pyrrolidinium-, Imidazolium- und/oder Sulfoniumverbindungen, vorzugsweise ausgewählt aus der Gruppe umfassend 1-Ethyl-3-methylimidazolium, 1,2-Dimethyl-3-propylimidazolium, 1,2-Diethyl-3,5-dimethylimidazolium, Trimethyl-n-hexylammonium, N-alkyl-N-methylpiperidinium, N-alkyl-N-methylmorpholinium und/oder N-alkyl-N-methylpyrrolidinium, insbesondere N-butyl-N-methylpyrrolidinium und/oder N-methyl-N-propylpyrrolidinium.

In Ausführungsformen ist das Lösungsmittel ausgewählt aus Dimethylcarbonat (DMC), Ethylencarbonat (EC), Diethylcarbonat (DEC), Ethylmethylcarbonat (EMC), Propylencarbonat (PC), Dimethylsulfoxid (DMSO), 1,3-Dioxolan (DOL), Acetonitril (AN) oder Tetrahydrofuran (THF).

In Ausführungsformen ist das Lösungsmittel mindestens eine ionische Flüssigkeit umfassend ein Anion, wobei das Anion der ionischen Flüssigkeit aus den beiden Alkalisalzen genannten Anionen ausgewählt ist.

In Ausführungsformen ist das Lösungsmittel mindestens eine ionische Flüssigkeit umfassend ein Kation, ausgewählt aus der Gruppe umfassend Alkylammonium-, Pyridinium-, Pyrazolium-, Pyrrolium-, Pyrrolinium-, Phosphonium-, Piperidinium-, Pyrrolidinium-, Imidazolium- und/oder Sulfoniumverbindungen, vorzugsweise ausgewählt aus der Gruppe umfassend 1-Ethyl-3-methylimidazolium, 1,2-Dimethyl-3-propylimidazolium, 1,2-Diethyl-3,5-dimethylimidazolium, Trimethyl-n-hexylammonium, N-alkyl-N-methylpiperidinium, N-alkyl-N-methylmorpholinium und/oder N-alkyl-N-methylpyrrolidinium, insbesondere N-butyl-N-methylpyrrolidinium und/oder N-methyl-N-propylpyrrolidinium; und ein Anion, ausgewählt aus der Gruppe umfassend Halogenide, Cyanide, Borate, insbesondere Tetrafluorborate oder Perfluoralkylborate; Nitrate, Sulfate, insbesondere Alkylsulfate, Arylsulfate oder Perfluoralkylsulfate; Sulfonate, insbesondere Alkylsulfonate, Arylsulfonate, perfluorierte Alkylsulfonate oder perfluorierte Arylsulfonate; Phosphate, insbesondere Hexafluorophosphate oder Perfluoralkylphosphate; Bis(perfluoralkylsulfonyl)amide, Bis(fluorsulfonyl)imide und/oder Bis(perfluoralkylsulfonyl)imide, wie Bis(trifluormethylylsulfonyl)imid oder Fluoralkylsulfonylacetamide.

In Ausführungsformen umfasst der Elektrolyt Additive. Zweckmäßig werden Additive eingesetzt, um Lithiumionen zu erzeugen, was die SEI-Bildung auf Anodenoberflächen erleichtert (Verbesserung der Batterie-

lebensdauer), die Ionenleitfähigkeit erhöht (für schnelleres Laden und Entladen) und die Elektrolytviskosität für einen effizienteren Ionentransport mildert.

Als Additive werden Substanzen verstanden, die zu einem anderen Material oder Produkt hinzugefügt werden, um positive Eigenschaften in Bezug auf die Herstellung, Lagerung, Verarbeitung oder Material- bzw. Produkteigenschaft zu erzielen.

In Ausführungsformen ist das Additiv ein elektronenleitendes Additiv, bevorzugt ein elektronenleitendes Additiv, ausgewählt aus Ruß, Graphen, Kohlenstoffnanoröhrchen, Karbonfasern, Graphitpartikeln oder Naturgraphitflocken.

Unter dem Begriff "Ruß" wird ein schwarzer, pulverförmiger Feststoff, enthaltend Kohlenstoff mit einem Anteil im Bereich von 80 % bis 100 %, verstanden.

Beispielhafte Elektrolytzusätze sind unter anderem, ohne jedoch darauf beschränkt zu sein:

- Lithiumdifluorid (Oxalat)-boratsalz (LiDFOB),
- Triallylphosphat (TAP)-Monomer,
- Fluoroethylencarbonat (FEC),
- Tetraethylammoniumtetrafluoroborat [TEA(BF$_4$)],
- Lithiumnitrat (LiNO$_3$),
- Ethylensulfit (ES),
- Vinylidencarbonat (VC),
- Lithiumbis(oxalato)borat (LiBOB),
- Diethyl-2,5-furandicarboxylat (DAP),
- Hexafluoroisopropanol (HFiP).

Das elektrochemische Bauelement bildet in Ausführungsformen eine elektrochemische Zelle, welche neben der kohlenstoffbasierten Anode, der kohlenstoffbasierten Kathode, dem Separator und Elektrolyten, einen Stromkollektor umfasst. In dieser Zelle sind der Elektrolyt und der Separator zwischen der kohlenstoffbasierten Anode und der kohlenstoffbasierten Kathode angeordnet. Der oder die Stromkollektoren sind mit der Anode und/oder der Kathode verbunden. In Ausführungsformen ist das elektrochemische Bauelement eine Batterie, die mindestens eine, wie oben beschriebene elektrochemische Zelle als Basiselement umfasst.

In verschiedenen Ausführungsformen können die Basiselemente sowohl parallel als auch in Reihe miteinander verbunden werden, um ein Batteriesystem zu bilden, das aus dem elektrochemischen Bauelement aufgebaut ist.

In weiteren Ausführungsformen ist das elektrochemische Bauelement aus einer Primärbatterie oder einer Sekundärbatterie ausgewählt.

Unter dem Begriff "Primärbatterie" wird eine nicht wieder aufladbare Batterie verstanden. Unter dem Begriff "Sekundärbatterie" wird eine wieder aufladbare Batterie verstanden. In bevorzugten Ausführungsformen ist das elektrochemische Bauelement eine Sekundärbatterie.

In Ausführungsformen liegt das elektrochemische Bauelement in Form einer zylindrischen Zelle (rund), mit einer flachen Bauform (flach) oder mit einer eckigen Bauform (rechteckig) vor.

In Ausführungsformen liegt das elektrochemische Bauelement in Form einer flexiblen bzw. verformbaren Zelle vor.

In Ausführungsformen liegt das elektrochemische Bauelement in Form einer "Swagelok-Zelle", einer Knopfzelle, z. B. einer zylindrischen 18650-Zelle, vor.

Unter dem Begriff "Swagelok-Zelle" wird eine zylindrische elektrochemische Zelle umfassend zwei oder drei Elektroden, einen Separator und externen Edelstahlkappen verstanden, wobei sich zwischen Anode und Kathode ein Elektrolyt befindet.

Unter dem Begriff "Knopfzelle" wird eine elektrochemische Zelle mit rundem Querschnitt verstanden, wobei die Höhe kleiner ist als der Durchmesser der Zelle.

Unter dem Begriff "18650-Zelle" wird eine zylindrische elektrochemische Zelle mit einem Durchmesser von 18 mm und einer Länge von 65 mm verstanden.

In Ausführungsformen liegt das elektrochemische Bauelement in Form einer Pouch-Zelle vor.

Unter dem Begriff "Pouch-Zelle" wird eine elektrochemische Zelle in Form eines Beutels verstanden, wobei die aktiven Schichten gestapelt oder gefaltet vorliegen und von einer flexiblen, Außenfolie, bevorzugt aus Aluminium, umschlossen sind. Vorteilhaft weisen Pouch-Zellen eine geringe Dicke, ein geringeres Gewicht und anwendungsspezifische Größen auf.

In Ausführungsformen ist das elektrochemische Bauelement eine Batterie, bevorzugt eine Sekundärbatterie.

In weiteren Ausführungsformen ist das elektrochemische Bauelement eine Komponente einer Batterie, die zur Speicherung elektrischer Energie in einem elektrischen Stromnetz verwendet wird, wobei die Vorrichtung mit dem elektrischen Stromnetz verbunden ist.

Vorteilhaft weist das erfindungsgemäße elektrochemische Bauelement eine hohe und einstellbare Kapazität (80 bis 140 Wh/kg, bevorzugt 90 bis 120 Wh/kg) auf Zellebene auf (auf der Basis des Zellgewichts), welche wesentlich höher als die Kapazität von bekannten GDIBs ist. Vorteilhaft werden durch die Erfindung Kapazitäten von 300 bis 400 Wh/kg erreicht.

Weiterhin vorteilhaft weist das elektrochemische Bauelement eine Arbeitsspannung durch die Verwendung von (maximal 4,5 V, bevorzugt im Bereich von 3,5 V bis 5,1 V) auf.

Das erfindungsgemäße elektrochemische Bauelement weist typisch eine Entladungsrate von 2 C bis maximal 5 C auf.

Das erfindungsgemäße elektrochemische Bauelement weist ferner eine Ladungsrate von typischerweise 2 C bis maximal 5 C auf.

Theoretisch sind Ladungsraten bis 10 C und Entladungsraten bis 10 C realisierbar.

Vorteilhaft wird eine Zyklenstabilität von mindestens 3000 Zyklen erreicht.

Die C-Rate ist das Verhältnis des tatsächlichen Entladestroms oder Ladestroms (I) zu der Nennkapazität (C) einer Batterie oder eines Akkus. Sie berechnet sich nach:

$$C\text{-Rate (C)} = I / C$$

wobei gilt:

- I ist der tatsächliche Entladestrom oder Ladestrom.
- C ist die Nennkapazität der Batterie oder des Akkumulators.

Weiter vorteilhaft können die erfindungsgemäßen elektrochemischen Bauelemente in einem weiten Temperaturbereich betrieben werden, bevorzugt im Bereich von weniger als -50°C bis über 50°C wodurch ein stabiler und sicherer Betrieb von elektronischen Geräten, insbesondere tragbaren Geräten, wie Laptops oder Handys; oder Transportanwendungen, wie Hybrid- oder Elektrofahrzeugen, oder innerhalb eines elektrischen Stromnetzes bzw. in stationären Energiespeichern möglich ist.

Ein weiterer Aspekt der Erfindung betrifft die Verwendung des erfindungsgemäßen elektrochemischen Bauelements zur Stromversorgung eines elektronischen Geräts, zur Stromversorgung eines Hybrid- oder Elektrofahrzeugs oder zur Speicherung von elektrischer Energie innerhalb eines elektrischen Stromnetzes.

Vorteilhaft lösen die erfindungsgemäßen elektrochemischen Bauelemente beim Einsatz in elektronischen Geräten, insbesondere in Geräten der Unterhaltungselektronik, potenzielle Sicherheitsprobleme durch Brand- und/oder Explosionsgefahr im Zusammenhang mit Lithiumlonen-Batterien. Die Ungefährlichkeit der Komponenten, der elektrochemischen Bauelemente sorgt für eine insgesamt einfache Handhabung bei der Verwendung sowie beim Transport.

Ein weiterer Aspekt die Erfindung betrifft ein Verfahren zur Lieferung von elektrischer Energie an eine externe Vorrichtung, umfassend:

(a) Bereitstellen eines erfindungsgemäßen elektrochemischen Bauelements,
(b) optional Verschaltung der Einzelzellen zu einem Batteriemodul (reihen und parallelschalten der Zellen),
(c) Verbinden des elektrochemischen Bauelements mit einer externen Vorrichtung und
(d) Leitung von elektrischer Energie von dem elektrochemischen Bauelement zu der externen Vorrichtung.

In weiteren Ausführungsformen ist die externe Vorrichtung ein elektronisches Gerät oder ein Hybrid- oder Elektrofahrzeug.

Für die Realisierung der Erfindung ist es auch zweckmäßig, die vorbeschriebenen Ausführungsformen und Merkmale der Ansprüche zu kombinieren.

**Ausführungsbeispiele**

Nachfolgend soll die Erfindung anhand von Ausführungsbeispielen eingehender erläutert werden. Dabei soll die Erfindung beschreiben werden, ohne diese zu beschränken.

Anhand von Zeichnungen wird die Erfindung näher erläutert. Dabei zeigen:

**Fig. 1** Vergleich der Energiedichte von Li-GDIBs und LIBs.

**Fig. 2** LSV-Kurven verschiedener Elektrolyte auf der SS-Elektrode in Li//SS-Zellen bei einer Scanrate von 1 mV/s.

**Fig. 3** Floating-Test verschiedener Elektrolyte bei 5 V.

**Fig. 4** Typisches Lade-Entlade-Profil einer GDIB.

**Fig. 5** Graphit//Graphit-Voll-Swagelok-Zelle in 5 M LiFSI und 2M LiPF$_6$ Elektrolyt bei 50 mA g$^{-1}$.

**Fig. 6** Zyklus-Performanz der Graphit//Graphit-Voll-Swagelok-Zelle mit (1) Lade- und (2) Entladekurve. Langzeit-Zyklus-Stabilität der GDIB bei 0,05 A/g und einer Massebeladung von 5 mg/cm$^2$.

**Fig. 7** Selbstentladungsverhalten GDIB.

In den folgenden Abschnitten wird eine beispielhafte Methode zur Herstellung eine GDIB gemäß der vorliegenden Erfindung beschrieben.

Graphitpulver wurde mit Alginsäure (2,5 % Gewichtsanteil) und Ruß in Wasser im Verhältnis 8:1:1 gemischt. Anschließend wurden die homogenen wässrigen Schlämme auf Edelstahlfolie des Typs 304 aufgebracht und in einem Vakuumofen getrocknet. Die Graphitbeladung wurde im Bereich von 1,5 bis 2 mg cm$^{-2}$ kontrolliert. Der mehrkomponentige Elektrolyt wurde in einer Argon (Ar)-gefüllten *Glovebox* mit einem H$_2$O- und O$_2$-Gehalt unter 0,1 ppm hergestellt. LiPF$_6$ wurde in 5 M LiFSI/DMC:EC in spezifischen molaren Verhältnissen zugegeben. Die Mischung wurde in der *Glovebox* 10 Stunden lang gerührt.

SEM-Bilder und elementare Kartierungsbilder wurden auf einem Rasterelektronenmikroskop Zeiss Gemini 500 mit einem EDX-Detektor vorbereitet. Die ex-situ- und in-situ-Röntgenbeugungsdaten wurden auf einem X'pert Pro Diffraktometer mit Cu-K_$\alpha$_-Strahlung erfasst. Die XPS-Daten wurden auf einem XPS PHI 5600 mit einer monochromatischen Al-K_$\alpha$_-Quelle gemessen.

Die lineare Stromspannungs-Polarographie (LSV) (Scanrate: 1 mV/s) und Floating-Tests (Anfangsspannung von 5 V) für verschiedene Elektrolyte wurden auf einer CHI-Elektrochemiestation unter Verwendung einer Zwei-Elektroden-Zelle (2025-Knopfzelle) durchgeführt, wobei Lithiumfolie als Anode und Edelstahl als Kathode verwendet wurden. Glasfaser wurde als Separator verwendet.

Swagelok-Zellen wurden zur Messung der Batterieleistung verwendet. Die Zellen wurden in einer mit Argon gefüllten *Glovebox* mit Feuchtigkeits- und $O_2$-Gehalten von < 0.1 ppm montiert.

Graphitelektrode und Lithiumfolie wurden verwendet, um Halbzellen zu montieren, während für Vollzellen zwei Graphitelektroden (Kathode:Anode = 3,3:1) verwendet wurden.

Die Batterieleistung wurde auf dem LAND-Batterieprüfsystem gemessen. Das Potenzialfenster von 0,01 bis 2 V bzw. 3 bis 5,2 V (gegen Li/Li$^+$) wurde für Anoden- bzw. Kathodenhalbzellen verwendet. Die Batterieleistung wurde in einem Spannungsfenster von 3 bis 5 V getestet. Die CV-Charakterisierung wurde auf der CHI-Elektrochemiestation durchgeführt.

Pouch-Zellen wurden in einer mit Argon gefüllten *Glovebox* mit einem Wassergehalt und einem Sauerstoffgehalt von unter 0,1 ppm montiert. Dabei wurde der expandierte Graphit als Kathode, synthetisches Graphit als Anode, ein mehrkomponentiger konzentrierter Elektrolyt und ein Glasfaser-Separator verwendet. Zuerst wurden die aktiven Materialien auf die Edelstahlfolie mit einer Flächendichte von 5 bis 20 mg/cm$^2$ für die Kathode und 2 bis 5 mg/cm$^2$ für die Anode aufgetragen. Anschließend wurden die Elektroden verdichtet und dann bei 65 °C unter einer Argonatmosphäre für 72 Stunden getrocknet, gefolgt von Laminieren, Schweißen, Einwickeln, Backen, Einspritzen des mehrkomponentigen konzentrierten Elektrolyten und Vorverpacken.

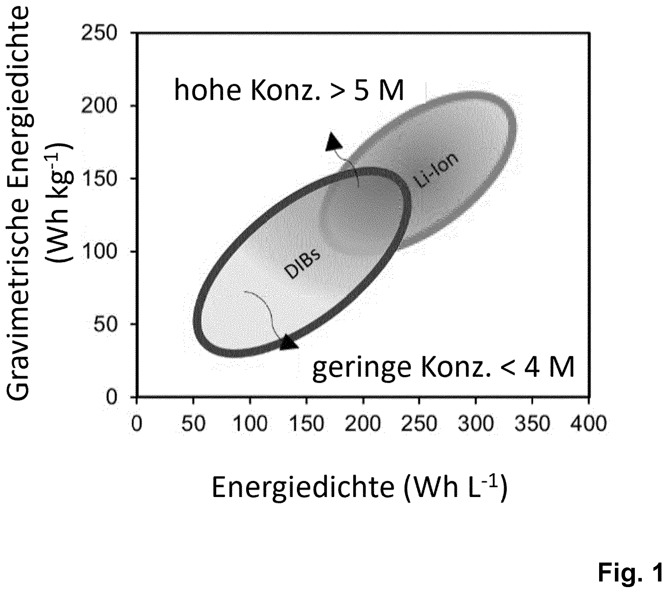

Fig.1 zeigt die Energiedichte von Li-Elektrolytbasierten GDIBs auf Material- und Zellebene in Bezug auf die Elektrolytkonzentration. In diesem Zusammenhang könnten GDIBs bei Konzentrationen von mehr als 5 M Energiedichten erreichen, die denen kommerzieller LIBs nahekommen.

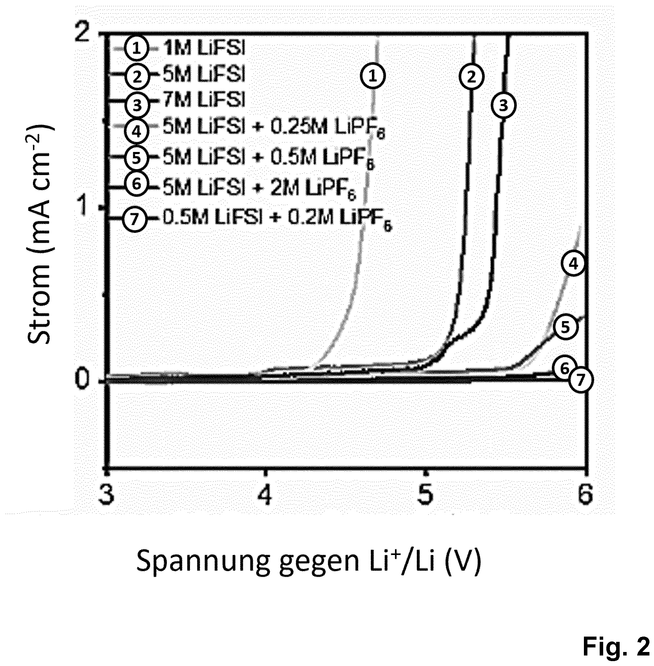

Fig. 2 zeigt Untersuchungen verschiedener Konzentrationen des LiPF6/LiFSI in DMC unter Verwendung der linearen Stromspannungspolarographie (LSV) bei einer Scanrate von 1 mV/s am SS-Stromkollektor. Da das LiPF$_6$-Salz in Karbonat-basierten Elektrolyten ein hohes elektrochemisches Stabilitätsfenster über 6,0 V (gegen Li/Li$^+$) aufweist und in der Lage ist, eine Passivierungsschicht auf dem Aluminium- und Edelstahlstromkollektor zu bilden, kann die Zugabe von LiPF$_6$ in den LiFSI-Elektrolyten die laufende Nebenreaktion mit dem Stromkollektor unterdrücken und die Oxidationsspannung erhöhen.

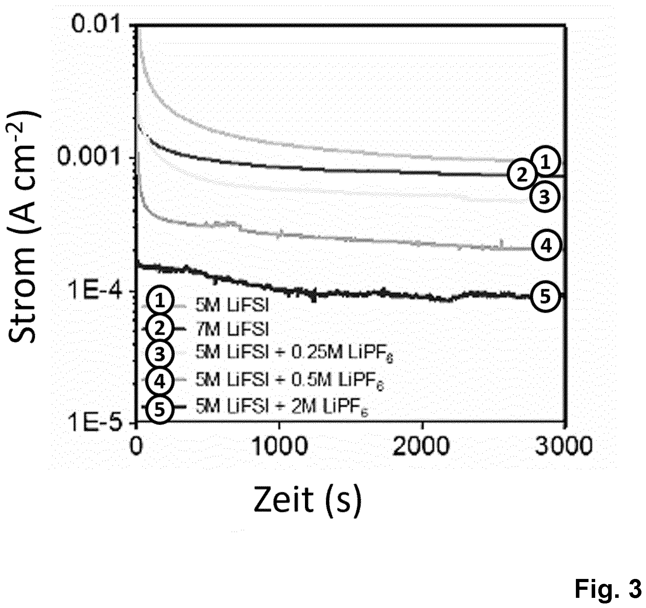

In Fig.3 ist zu sehen, dass eine LiFSI-Salzkonzentration von 1 M den Oxidationsstrom auf 4,3 V (gegen Li/Li$^+$) begrenzt, was auf Korrosion des Edelstahls und den Zerfall des Elektrolyten hinweisen könnte. Obwohl das Oxidationspotenzial für 5 und 7 M LiFSI auf etwa 5 V (gegen Li/Li$^+$) verbessert wird, führt die Unfähigkeit des FSI-basierten Elektrolyten, eine effektive Passivierungsschicht (reiche an Li-F) auf dem metallischen Stromkollektor zu bilden, zu einer fortlaufenden anodischen Auflösungsreaktion bei 5 V (gegen Li/Li$^+$). Im Vergleich dazu lieferte 5 M LiFSI im Vergleich zu 5M LiFSI-2 M LiPF6 einen Anodenstrom, der um das 102-fache höher war, und dies ging mit schwerer Korrosion der SS- und Al-Stromkollektoren einher.

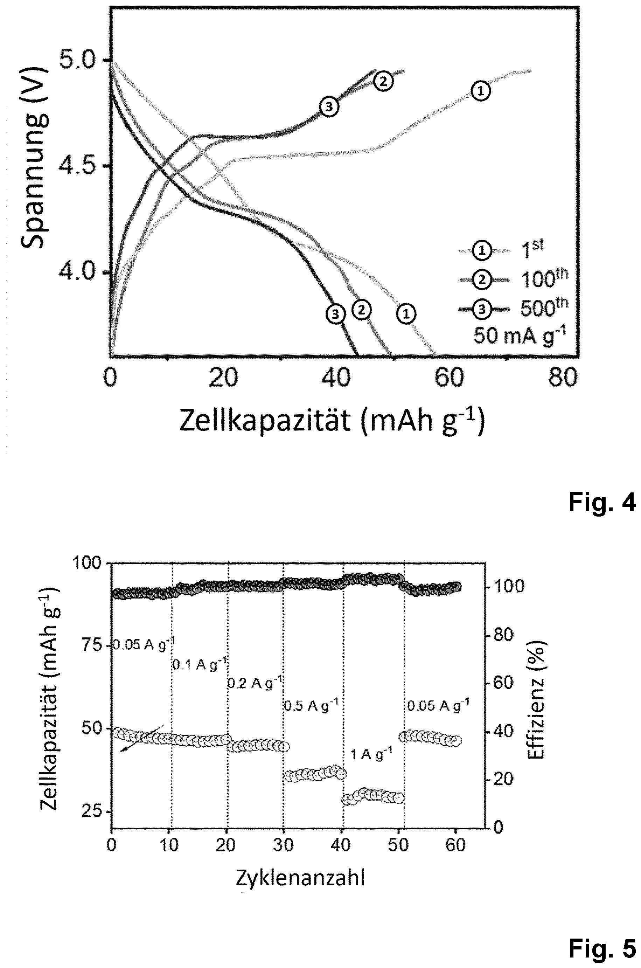

Fig. 4 zeigt die Lade- und Entladekurven der Halbzellen und Vollzellen für eine Swagelok-Konfiguration. Die Entladungskapazität wurde auf der Grundlage des Zellgewichts (Elektroden und Elektrolyt) berechnet. Das Gewichtsverhältnis der aktiven Materialien in den Elektroden wurde auf 1:3,3 (Anode: Kathode) eingestellt.

In Fig. 5 sind die hoch reversiblen Kapazitäten bei verschiedenen Stromraten (0,05, 0,1, 0,2, 0,5, 1 A g$^{-1}$) dargestellt. Die Vollzelle zeigt eine äußerst stabile Zyklusleistung mit einer reversiblen Kapazität von etwa 44 mAh g$^{-1}$ und einer Kapazitätserhaltung von 95 % nach 500 Zyklen.

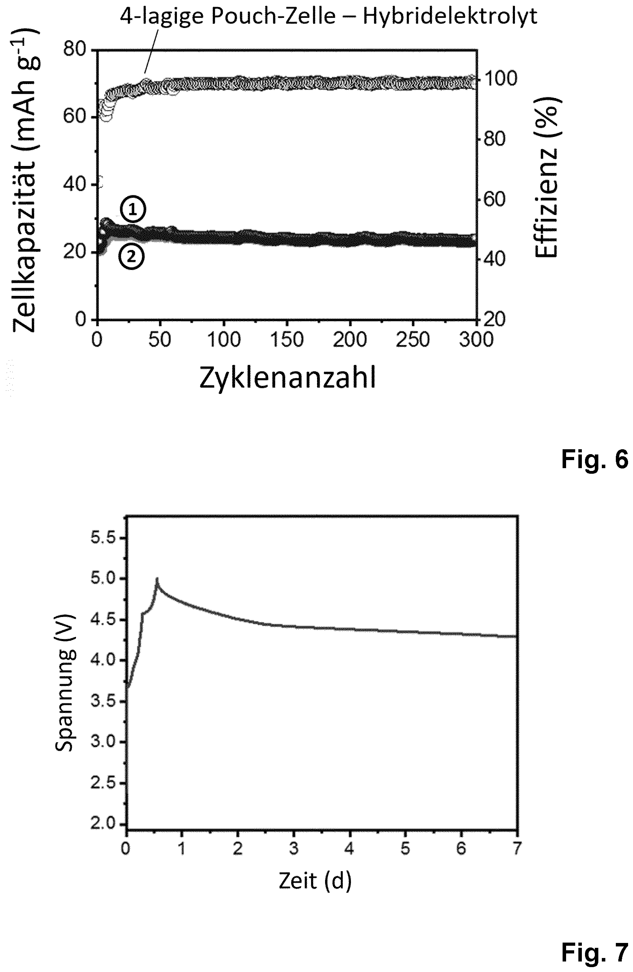

Fig. 6 zeigt den Zyklus bei 0,5 A g$^{-1}$ zwischen 3,5 und 5 V mit einer Kapazität von 21 mAh g$^{-1}$ und einer Kapazitätserhaltung von 98,2 % (nach 300 Zyklen).

In Fig. 7 ist das Selbstentladungsverhalten einer erfindungsgemäßen GDIB dargestellt.

### Nichtpatentliteratur

Read, J. A.; Cresce, A. V.; Ervin, M. H.; Xu, K., Dual-graphite chemistry enabled by a high voltage electrolyte. Energy & Environmental Science 2014, 7 (2), 617-620.

Rothermel, S.; Meister, P.; Schmuelling, G.; Fromm, O.; Meyer, H.-W.; Nowak, S.; Winter, M.; Placke, T., Dual-graphite cells based on the reversible intercalation of bis(trifluoromethanesulfonyl)imide anions from an ionic liquid electrolyte. Energy & Environmental Science 2014, 7 (10), 3412-3423.

Miyoshi, S.; Nagano, H.; Fukuda, T.; Kurihara, T.; Watanabe, M.; Ida, S.; Ishihara, T., Dual-Carbon Battery Using High Concentration LiPF6 in Dimethyl Carbonate (DMC) Electrolyte. Journal of The Electrochemical Society 2016, 163 (7), A1206-A1213.

Beltrop, K.; Beuker, S.; Heckmann, A.; Winter, M.; Placke, T., Alternative electrochemical energy storage: potassium-based dual-graphite batteries. Energy & Environmental Science 2017, 10 (10), 2090-2094.

Fan, L.; Liu, Q.; Chen, S.; Lin, K.; Xu, Z.; Lu, B., Potassium-Based Dual Ion Battery with Dual-Graphite Electrode. Small 2017, 13 (30), 1701011.

Ji, B.; Zhang, F.; Wu, N.; Tang, Y., A Dual-Carbon Battery Based on Potassium-Ion Electrolyte. Advanced Energy Materials 2017, 7 (20), 1700920.

Han, P.; Han, X.; Yao, J.; Yue, L.; Zhao, J.; Zhou, X.; Cui, G., Mesocarbon microbead based dual-carbon batteries towards low cost energy storage devices. Journal of Power Sources 2018, 393, 145-151.

Heckmann, A.; Thienenkamp, J.; Beltrop, K.; Winter, M.; Brunklaus, G.; Placke, T., Towards highperformance dual-graphite batteries using highly concentrated organic electrolytes. Electrochimica Acta 2018, 260, 514-525.

Wang, A.; Yuan, W.; Fan, J.; Li, L., A Dual-graphite Battery with Pure 1-Butyl-1-methylpyrrolidinium bis(trifluoromethylsulfonyl) Imide as the Electrolyte. Energy Technology 2018, 6 (11), 2172-2178.

Zhang, L.; Wang, H., Dual-Graphite Batteries with Flame-Retardant Electrolyte Solutions. ChemElectroChem 2019, 6 (17), 4637-4644.

Rothermel, S.; Meister, P.; Fromm, O.; Huesker, J.; Meyer, H. W.; Winter, M.; Placke, T., Study of the Electrochemical Behavior of Dual-Graphite Cells Using Ionic Liquid-Based Electrolytes. ECS Transactions 2014, 58 (14), 15-25.

Placke, T.; Fromm, O.; Lux, S. F.; Bieker, P.; Rothermel, S.; Meyer, H.-W.; Passerini, S.; Winter, M., Reversible Intercalation of Bis(trifluoromethanesulfonyl) imide Anions from an Ionic Liquid Electrolyte into Graphite for High Performance Dual-Ion Cells. Journal of The Electrochemical Society 2012, 159 (11), A1755-A1765.

Münster, P.; Heckmann, A.; Nölle, R.; Winter, M.; Beltrop, K.; Placke, T., Enabling High Performance Potassium-Based Dual-Graphite Battery Cells by Highly Concentrated Electrolytes. Batteries & Supercaps 2019, 2 (12), 992-1006.

Liu, T.; Han, X.; Zhang, Z.; Chen, Z.; Wang, P.; Han, P.; Ding, N.; Cui, G., A high concentration electrolyte enables superior cycleability and rate capability for high voltage dual graphite battery. Journal of Power Sources 2019, 437, 226942.

Qiao, Y.; Jiang, K.; Li, X.; Deng, H.; He, Y.; Chang, Z.; Wu, S.; Guo, S.; Zhou, H., A Hybrid Electrolytes Design for Capacity-Equivalent Dual-Graphite Battery with Superior Long-Term Cycle Life. Advanced Energy Materials 2018, 8 (24), 1801120.

Wang, S.; Jiao, S.; Song, W.-L.; Chen, H.-S.; Tu, J.; Tian, D.; Jiao, H.; Fu, C.; Fang, D.-N., A novel dual-graphite aluminum-ion battery. Energy Storage Materials 2018, 12, 119-127.

Huang, Y.; Xiao, R.; Ma, Z.; Zhu, W., Developing Dual-Graphite Batteries with Pure 1-Ethyl-3-methylimidazolium Trifluoromethanesulfonate Ionic Liquid as the Electrolyte. ChemElectroChem 2019, 6 (17), 4681-4688.

Wu, S.; Zhang, F.; Tang, Y., A Novel Calcium-Ion Battery Based on Dual-Carbon Configuration with High Working Voltage and Long Cycling Life. Advanced Science 2018, 5 (8), 1701082. Wang, G.; Wang, F.; Zhang, P.; Zhang, J.; Zhang, T.; Müllen, K.; Feng, X., Polarity-Switchable Symmetric Graphite Batteries with High Energy and High Power Densities. Advanced Materials 2018, 30 (39), 1802949.

Yang, D. ; Watanabe, M. ; Takagaki, A.; Ishihara, T., High Voltage and Capacity Dual-Ion Battery Using Acetonitrile-Aqueous Hybrid Electrolyte with Concentrated LiFSI-LiTFSI. J. Electrochem. Soc. 2022, 169, 120516.

Heckmann, A.; Thienenkamp, J.; Beltrop, K.; Winter, M.; Brunklaus, G.; Placke, T., Towards highperformance dual-graphite batteries using highly concentrated organic electrolytes. Electrochimica Acta 2018, 260, 514-525.

**Patentansprüche**

1.   Elektrochemisches Bauelement umfassend mindestens eine Anode, mindestens eine Kathode, einen Separator und mindestens einen Elektrolyten, wobei die Kathode und die Anode, jeweils ein kohlenstoffbasiertes Material aufweisen, **dadurch gekennzeichnet, dass** der Elektrolyt mindestens zwei Alkalisalze mit unterschiedlichen Anionen enthält; wobei der Elektrolyt wasserfrei oder nahezu wasserfrei ist und eine Gesamtalkalisalzkonzentration im Bereich von 6 mol/L bis 10 mol/L aufweist.

2.   Das elektrochemische Bauelement nach Anspruch 1, **dadurch gekennzeichnet, dass** die mindestens zwei Alkalisalzen Lithiumsalze sind.

3.   Das elektrochemische Bauelement nach Anspruch 2, **dadurch gekennzeichnet, dass** die Alkalisalze Lithiumbis(fluorosulfonyl)imid (LiFSI) und Lithiumhexafluorophosphat (LiPF$_6$) sind.

4.   Das elektronisches Bauelement nach einem der Ansprüche 1 bis 3, **dadurch gekennzeichnet, dass** das Molverhältnis der mindestens zwei Alkalisalze im Bereich von 1:2,5 bis 2,5:1 liegt.

5.   Das elektrochemisches Bauelement nach einem der Ansprüche 1 bis 4, **dadurch gekennzeichnet, dass** der Elektrolyt Lithiumbis(fluorosulfonyl)imid mit einer Konzentration im Bereich von 3 mol/L bis 6 mol/L und Lithiumhexafluorophosphat mit einer Konzentration im Bereich von 1 mol/L bis 3 mol/L umfasst.

6.   Das elektrochemisches Bauelement nach einem der Ansprüche 1 bis 5, **dadurch gekennzeichnet, dass** der Elektrolyt ein organisches Lösungsmittel, insbesondere einen Ester der Kohlensäure, enthält,

7.   Das elektrochemisches Bauelement nach einem der Ansprüche 1 bis 6, **dadurch gekennzeichnet, dass** das kohlenstoffbasierte Material ausgewählt ist aus der Gruppe umfassend Ruß, Graphitpartikel, synthetische Graphite, expandierte Graphite, Naturgraphitflocken, Graphen, Kohlenstoffnanoröhrchen und Karbonfasern.

8.   Das elektrochemische Bauelement nach einem der Ansprüche 1 bis 7, **dadurch gekennzeichnet, dass** die mindestens eine Kathode weiterhin ein elektronenleitendes Additiv und/oder ein Bindemittel umfasst.

9. Das elektrochemische Bauelement nach Anspruch 8, **dadurch gekennzeichnet, dass** das Bindemittel ausgewählt ist aus Alginat, Polyvinylidenfluorid, Polytetrafluorethylen, StyrolButadien-Kautschuk und Carboxymethylcellulose.

10. Das elektrochemische Bauelement nach einem der Ansprüche 1 bis 9, **dadurch gekennzeichnet, dass** der Separator eine mikroporöse Polymermembran, ein GlasfaserVlies oder ein Polymer-Vlies ist.

11. Das elektrochemische Bauelement nach einem der Ansprüche 1 bis 10, umfassend weiterhin einen Stromkollektor für die Kathode und/oder Anode.

12. Das elektrochemische Bauelement nach Anspruch 11, **dadurch gekennzeichnet, dass** der Stromkollektor für die Kathode mindestens ein elektronenleitendes Material, ausgewählt aus Karbongewebe, Karbonpapier, Karbonfasern, Graphenfilmen, Glaskohlenstoff, Nickel, Tantal und/oder Wolfram, umfasst.

13. Verwendung eines elektrochemischen Bauelements nach einem der Ansprüche 1 bis 12 zur Stromversorgung eines elektronischen Geräts, zur Stromversorgung eines Hybrid- oder Elektrofahrzeugs oder zur Speicherung von elektrischer Energie innerhalb eines elektrischen Stromnetzes.

**Fig. 1**

Fig. 2

Fig. 3

Fig. 4

Fig. 5

**Fig. 6**

**Fig. 7**

Europäisches
Patentamt

European
Patent Office

Office européen
des brevets

## EUROPÄISCHER RECHERCHENBERICHT

**Nummer der Anmeldung**

EP 24 20 5504

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2020 187825 A (TPR CO LTD) 19. November 2020 (2020-11-19) * Absätze [0012], [0013], [0018] - [0048], [0050], [0051] * | 1-13 | INV. H01M4/133 H01M4/62 H01M10/0525 H01M10/056 |
| A | CN 108 074 750 B (MICROVAST POWER SYSTEMS HUZHOU CO LTD) 19. Juni 2020 (2020-06-19) * das ganze Dokument * | 1-13 | H01M50/534 H01M10/0566 H01M10/0568 |
| A,P | SABAGHI DAVOOD ET AL: "High energy density and durable pouch-cell graphite-based dual ion battery using concentrated hybrid electrolytes", JOURNAL OF POWER SOURCES, ELSEVIER, AMSTERDAM, NL, Bd. 588, 19. Oktober 2023 (2023-10-19), XP087434637, ISSN: 0378-7753, DOI: 10.1016/J.JPOWSOUR.2023.233685 [gefunden am 2023-10-19] * das ganze Dokument * | 1-13 | ADD. H01M4/583 |

RECHERCHIERTE SACHGEBIETE (IPC)

H01M

Der vorliegende Recherchenbericht wurde für alle Patentansprüche erstellt

| Recherchenort | Abschlußdatum der Recherche | Prüfer |
|---|---|---|
| München | 6. Februar 2025 | Radinger, Hannes |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 20 5504

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-02-2025

| Im Recherchenbericht angeführtes Patentdokument | Datum der Veröffentlichung | Mitglied(er) der Patentfamilie | Datum der Veröffentlichung |
|---|---|---|---|
| JP 2020187825 A | 19-11-2020 | JP 6889751 B2<br>JP 2020187825 A | 18-06-2021<br>19-11-2020 |
| CN 108074750 B | 19-06-2020 | KEINE | |

Für nähere Einzelheiten zu diesem Anhang : siehe Amtsblatt des Europäischen Patentamts, Nr.12/82

EPO FORM P0461

# IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

## In der Beschreibung aufgeführte Patentdokumente

- US 4830938 A, McCullough
- CN 110635112 A
- DE 102021115802 A1
- CN 108063217 B
- JP 2008543002 A
- DE 102011054119 A1
- JP 2023116297 A
- DE 102020108397 B3
- DE 102011054122 A1

## In der Beschreibung aufgeführte Nicht-Patentliteratur

- **READ, J. A** ; **CRESCE, A. V** ; **ERVIN, M. H** ; **XU, K.** Dual-graphite chemistry enabled by a high voltage electrolyte. *Energy & Environmental Science*, 2014, vol. 7 (2), 617-620
- **ROTHERMEL, S.** ; **MEISTER, P** ; **SCHMUELLING, G** ; **FROMM, O** ; **MEYER, H.-W.** ; **NOWAK, S.** ; **WINTER, M.** ; **PLACKE, T.** Dual-graphite cells based on the reversible intercalation of bis(trifluoromethanesulfonyl)imide anions from an ionic liquid electrolyte.. *Energy & Environmental Science*, 2014, vol. 7 (10), 3412-3423
- **MIYOSHI, S** ; **NAGANO, H** ; **FUKUDA, T** ; **KURIHARA, T** ; **WATANABE, M** ; **IDA, S** ; **ISHIHARA, T**. Dual-Carbon Battery Using High Concentration LiPF6 in Dimethyl Carbonate (DMC) Electrolyte.. *Journal of The Electrochemical Society*, 2016, vol. 163 (7), A1206-A1213
- **BELTROP, K** ; **BEUKER, S** ; **HECKMANN, A** ; **WINTER, M** ; **PLACKE, T**. Alternative electrochemical energy storage: potassium-based dual-graphite batteries.. *Energy & Environmental Science*, 2017, vol. 10 (10), 2090-2094
- **FAN, L.** ; **LIU, Q.** ; **CHEN, S** ; **LIN, K** ; **XU, Z** ; **LU, B.** Potassium-Based Dual Ion Battery with Dual-Graphite Electrode.. *Small*, 2017, vol. 13 (30), 1701011
- **JI, B.** ; **ZHANG, F.** ; **WU, N** ; **TANG, Y**. A Dual-Carbon Battery Based on Potassium-Ion Electrolyte. *Advanced Energy Materials*, 2017, vol. 7 (20), 1700920
- **HAN, P.** ; **HAN, X.** ; **YAO, J.** ; **YUE, L.** ; **ZHAO, J.** ; **ZHOU, X.** ; **CUI, G**. Mesocarbon microbead based dual-carbon batteries towards low cost energy storage devices. *Journal of Power Sources*, 2018, vol. 393, 145-151
- **HECKMANN, A.** ; **THIENENKAMP, J.** ; **BELTROP, K** ; **WINTER, M** ; **BRUNKLAUS, G** ; **PLACKE, T.** Towards highperformance dual-graphite batteries using highly concentrated organic electrolytes.. *Electrochimica Acta*, 2018, vol. 260, 514-525
- **WANG, A** ; **YUAN, W.** ; **FAN, J.** ; **LI, L.** A Dual-graphite Battery with Pure 1-Butyl-1-methylpyrrolidinium bis(trifluoromethylsulfonyl) Imide as the Electrolyte.. *Energy Technology*, 2018, vol. 6 (11), 2172-2178
- **ZHANG, L** ; **WANG, H.** Dual-Graphite Batteries with Flame-Retardant Electrolyte Solutions. *ChemElectroChem*, 2019, vol. 6 (17), 4637-4644
- **ROTHERMEL, S** ; **MEISTER, P** ; **FROMM, O.** ; **HUESKER, J.** ; **MEYER, H. W** ; **WINTER, M** ; **PLACKE, T**. Study of the Electrochemical Behavior of Dual-Graphite Cells Using Ionic Liquid-Based Electrolytes. *ECS Transactions*, 2014, vol. 58 (14), 15-25
- **PLACKE, T** ; **FROMM, O** ; **LUX, S. F.** ; **BIEKER, P** ; **ROTHERMEL, S.** ; **MEYER, H.-W.** ; **PASSERINI, S** ; **WINTER, M.** Reversible Intercalation of Bis(trifluoromethanesulfonyl)imide Anions from an Ionic Liquid Electrolyte into Graphite for High Performance Dual-Ion Cells. *Journal of The Electrochemical Society*, 2012, vol. 159 (11), A1755-A1765
- **MÜNSTER, P** ; **HECKMANN, A** ; **NÖLLE, R** ; **WINTER, M.** ; **BELTROP, K** ; **PLACKE, T.** Enabling High Performance Potassium-Based Dual-Graphite Battery Cells by Highly Concentrated Electrolytes. *Batteries & Supercaps*, 2019, vol. 2 (12), 992-1006
- **LIU, T** ; **HAN, X** ; **ZHANG, Z** ; **CHEN, Z** ; **WANG, P** ; **HAN, P** ; **DING, N** ; **CUI, G**. A high concentration electrolyte enables superior cycleability and rate capability for high voltage dual graphite battery.. *Journal of Power Sources*, 2019, vol. 437, 226942
- **QIAO, Y** ; **JIANG, K** ; **LI, X** ; **DENG, H** ; **HE, Y** ; **CHANG, Z** ; **WU, S** ; **GUO, S** ; **ZHOU, H**. A Hybrid Electrolytes Design for Capacity-Equivalent Dual-Graphite Battery with Superior Long-Term Cycle Life.. *Advanced Energy Materials*, 2018, vol. 8 (24), 1801120

- **WANG, S.** ; **JIAO, S** ; **SONG, W.-L** ; **CHEN, H.-S** ; **TU, J.** ; **TIAN, D.** ; **JIAO, H** ; **FU, C.** ; **FANG, D.-N**. A novel dual-graphite aluminum-ion battery.. *Energy Storage Materials*, 2018, vol. 12, 119-127
- **HUANG, Y.** ; **XIAO, R** ; **MA, Z.** ; **ZHU, W**. Developing Dual-Graphite Batteries with Pure 1-Ethyl-3-methy-limidazolium Trifluoromethanesulfonate Ionic Liquid as the Electrolyte.. *ChemElectroChem*, 2019, vol. 6 (17), 4681-4688
- **WU, S** ; **ZHANG, F** ; **TANG, Y**. A Novel Calcium-Ion Battery Based on Dual-Carbon Configuration with High Working Voltage and Long Cycling Life.. *Advanced Science*, 2018, vol. 5 (8), 1701082

- **WANG, G** ; **WANG, F** ; **ZHANG, P** ; **ZHANG, J.** ; **ZHANG, T** ; **MÜLLEN, K.** ; **FENG, X**. Polarity-Switchable Symmetric Graphite Batteries with High Energy and High Power Densities.. *Advanced Materials*, 2018, vol. 30 (39), 1802949
- **YANG, D** ; **WATANABE, M** ; **TAKAGAKI, A** ; **ISHIHARA, T.** High Voltage and Capacity Dual-Ion Battery Using Acetonitrile-Aqueous Hybrid Electrolyte with Concentrated LiFSI-LiTFSI.. *J. Electrochem. Soc.*, 2022, vol. 169, 120516
- **HECKMANN, A** ; **THIENENKAMP, J.** ; **BELTROP, K** ; **WINTER, M.** ; **BRUNKLAUS, G** ; **PLACKE, T**. Towards highperformance dual-graphite batteries using highly concentrated organic electrolytes. *Electrochimica Acta*, 2018, vol. 260, 514-525